(19) Europäisches Patentamt
European Patent Office
Office européen des brevets

(11) **EP 3 022 158 B2**

(12) **NOUVEAU FASCICULE DE BREVET EUROPEEN**
Après la procédure d'opposition

(45) Date de publication et mention de la décision concernant l'opposition:
**18.06.2025 Bulletin 2025/25**

(45) Mention de la délivrance du brevet:
**29.03.2017 Bulletin 2017/13**

(21) Numéro de dépôt: **14767107.7**

(22) Date de dépôt: **15.07.2014**

(51) Classification Internationale des Brevets (IPC):
*C02F 11/10* (2006.01)   *F23G 5/027* (2006.01)
*F23G 7/00* (2006.01)   *C02F 11/12* (2019.01)
*C02F 1/66* (2023.01)   *F23G 5/00* (2006.01)

(52) Classification Coopérative des Brevets (CPC):
**C02F 11/10; F23G 5/0273; F23G 7/001;** C02F 1/66;
C02F 11/12; C02F 11/13; C02F 2209/02;
C02F 2209/03; C02F 2301/066; C02F 2303/22;
Y02W 10/40

(86) Numéro de dépôt international:
**PCT/IB2014/063119**

(87) Numéro de publication internationale:
**WO 2015/008219 (22.01.2015 Gazette 2015/03)**

(54) **PROCÉDÉ DE CARBONISATION HYDROTHERMALE OPTIMISÉ ET INSTALLATION POUR SA MISE EN OEUVRE**

OPTIMIERTES HYDROTHERMALES KARBONISIERUNGSVERFAHREN UND ANLAGE ZUR IMPLEMENTIERUNG DAVON

OPTIMISED HYDROTHERMAL CARBONISATION METHOD AND FACILITY FOR IMPLEMENTING SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.07.2013 FR 1357093**

(43) Date de publication de la demande:
**25.05.2016 Bulletin 2016/21**

(73) Titulaire: **Suez International**
**92040 Paris la Défense Cedex (FR)**

(72) Inventeurs:
• **PARDO, Pierre Emmanuel**
**F-91400 Orsay (FR)**
• **BOURDAIS, Jean Louis**
**F-44110 Chateaubriant (FR)**

(74) Mandataire: **LLR**
**2, rue Jean Lantier**
**75001 Paris (FR)**

(56) Documents cités:
DE-A1- 2 556 283      US-A- 2 631 797
US-A- 3 962 076      US-A1- 2006 096 163
US-A1- 2006 096 163

EP 3 022 158 B2

**Description**

L'invention est relative à un procédé de carbonisation hydrothermale de produits pâteux ou de déchets, ou de boues de station d'épuration, procédé du genre de ceux selon lesquels les produits à traiter sont introduits dans un réacteur sous pression et chauffé à température de carbonisation T0, généralement comprise entre 140°C et 280°C, et les produits à traiter, avant d'être introduits dans le réacteur, subissent les étapes suivantes :

-    mise en pression,
-    préchauffage dans un échangeur, par un fluide thermique qui circule selon une boucle fermée, et qui reçoit de la chaleur en provenance des produits sortant du réacteur.

Le domaine de l'invention est celui du traitement de produits pâteux ou de déchets notamment ceux qui sont produits au cours du traitement des eaux (boues de stations d'épuration).

Plus précisément, l'invention concerne un procédé de carbonisation hydrothermale optimisé de produits pâteux en particulier de boues de station d'épuration déshydratées, permettant le traitement de grandes quantités de produits en minimisant les dimensions des équipements et en améliorant la réaction chimique.

On rappelle que la carbonisation hydrothermale est un procédé qui, en montant en température et en pression un composé organique en phase liquide, vise à induire des réactions chimiques permettant via la libération de molécules de $CO_2$ et d'augmenter l'hydrophobie du produit organique, ce qui permet par la suite une déshydratation optimale.

Ce genre de conditionnement thermique a déjà été utilisé pour des composés considérés comme liquides, c'est-à-dire dont la siccité est de l'ordre de 5% ou moins, ce qui induit des consommations thermiques importantes.

Ce genre de conditionnement thermique a aussi été utilisé pour des composés considérés comme solides, c'est-à-dire des produits pâteux ou des boues ayant une siccité au moins de l'ordre de 15%, pouvant aller jusqu'à 25 à 30%. Dans cette application, la mise en température est faite de deux manières différentes :

⇨ Soit par voie directe par injection de vapeur dans le réacteur.

⇨ Soit par voie indirecte par chauffage du réacteur en paroi, c'est-à-dire que le fluide de chauffage circule dans une enveloppe entourant le réacteur.

La voie directe a pour conséquence de diluer le produit, et d'entraîner des coups de bélier si la température initiale du réacteur est trop faible ; de plus pour monter à de fortes températures, notamment supérieures à 200°C, les pressions de vapeurs deviennent très élevées.

La voie indirecte a pour conséquence d'imposer des limites à la taille des réacteurs ; en effet, le transfert thermique ne se faisant que sur la paroi du réacteur alors qu'il faut chauffer le volume intérieur, il y a rapidement une problématique de taille limite au-delà de laquelle on ne chauffe pas suffisamment le produit, notamment la boue ; de plus un brassage intensif est recommandé pour permettre une homogénéisation du produit au travers du réacteur. Enfin la voie indirecte entraîne une stratification de la température dans le sens de la circulation du produit ; le produit organique n'atteint sa température finale qu'en fin de réacteur, ce qui limite le temps de séjour du produit à cette température finale.

Dans un exemple de fonctionnement par cette voie indirecte, un préchauffage du produit à traiter par le produit sortant du réacteur est prévu. Pour cela, une boucle d'huile, constituant un fluide thermique, permet la récupération d'une partie de la chaleur du produit carbonisé en utilisant un échangeur « produit carbonisé chaud/huile », et un échangeur « huile chaude /produit froid à traiter ».

US2006/0096163A1 décrit un procédé de carbonisation hydrothermale de boues de station d'épuration.

Il existe une problématique de l'échangeur.

Pour un produit solide au départ, c'est-à-dire dont la siccité est de l'ordre de 15% au moins, la problématique des coefficients d'échange thermique ainsi que de l'entartrage du produit est importante. C'est pourquoi, selon l'état de la technique, on prévoit deux échangeurs respectivement « produit carbonisé chaud/huile », et «huile chaude /produit froid à traiter» avec l'huile comme fluide thermique intermédiaire, et non pas un seul échangeur « produit chaud/produit froid » car il ne serait pas possible, dans un échangeur de chaleur tube dans tube concentriques, de bien nettoyer le tube extérieur sujet au dépôt. En outre, le préchauffage du produit organique avant injection dans le réacteur est partiel, et limité à une température, notamment d'environ 90°C, nettement inférieure à celle régnant dans le réacteur pour éviter les entartrages. Le produit n'atteindra la température de carbonisation, dans le réacteur, qu'après un temps de chauffage d'autant plus long que sa température à l'entrée sera basse. De ce fait, les dimensions du réacteur devront être relativement importantes pour assurer dans une première phase le chauffage à température de carbonisation, puis dans une deuxième phase la carbonisation.

L'invention a pour but, surtout, de fournir un procédé de carbonisation hydrothermale qui permet de minimiser le besoin thermique au niveau du réacteur, pour permettre de construire de gros réacteurs non mélangés tout en maîtrisant les problématiques d'exploitabilité des échangeurs.

Les objectifs présentés ci-dessus, ainsi que d'autres qui apparaitront par la suite, sont atteints à l'aide de l'optimisation du procédé de carbonisation hydrothermale.

Selon l'invention, le procédé de carbonisation hydrothermale de produits pâteux ou de déchets, ou de boues de station d'épuration, du genre défini précédemment, est défini tel que décrit dans la revendication 1. En particulier, le fluide thermique est chauffé dans la boucle par une source de chaleur externe, en aval de l'échange avec les produits sortant du réacteur, et en amont du préchauffage des produits entrant dans le réacteur, et en ce que la température du produit à traiter, préchauffé par le fluide thermique, à son entrée dans le réacteur est comprise entre la température de carbonisation T0 et T0 - 100°C.

De préférence, la siccité des produits à traiter est comprise entre 15% et 30%.

Le produit à traiter circule dans au moins un tube, y compris dans l'échangeur de préchauffage, jusqu'à son entrée dans le réacteur, et en au moins un endroit du tube, une injection de liquide est effectuée pour créer un anneau liquide contre la paroi intérieure du tube, et réduire les pertes de charge.

Le liquide injecté est une solution acide, qui non seulement réduit les pertes de charge, mais aussi évite, ou tout au moins réduit, l'entartrage. L'injection de solution acide peut être effectuée à divers niveaux de l'échangeur de préchauffage, pour contrôler le colmatage de l'échangeur.

Avantageusement la perte de charge de l'échangeur est contrôlée, et en cas d'augmentation de la perte de charge, la quantité de solution acide injectée pour l'anneau liquide est augmentée.

Le coefficient d'échange thermique de l'échangeur est avantageusement contrôlé, et en cas de diminution du coefficient d'échange, la quantité de solution acide injectée pour l'anneau liquide est augmentée.

La pression dans le réacteur est généralement comprise entre 20 et 35 bars. Le fluide thermique est de préférence une huile, mais de l'eau surchauffée pourrait être utilisée.

L'Injection d'acide en « anneau liquide » est effectuée après la mise sous pression de la boue.

Avantageusement, le procédé utilise un réacteur chicané non mélangé, chauffé en paroi, dans lequel le produit circule en flux piston.

Un refroidissement du produit est prévu avant stockage et déshydratation.

La divulgation est également relative à une installation pour la mise en œuvre du procédé défini précédemment. L'installation comporte :

- un réacteur sous pression
- des moyens pour chauffer le réacteur à une température de carbonisation T0, de préférence comprise entre 140°C et 280°C,
- une conduite d'alimentation du réacteur,
- un fluide thermique,
- une pompe de mise en pression desdits produits dans ladite conduite d'alimentation du réacteur, -
- un échangeur thermique entre ladite pompe et ledit réacteur pour le préchauffage du produit à traiter par ledit fluide thermique, -
- un autre échangeur, ledit fluide thermique pouvant circuler en boucle fermée et recevoir de la chaleur, dans ledit échangeur en provenance du produit sortant du réacteur,
- et une chaudière pour chauffer le fluide thermique de la boucle fermée, en aval de l'échange avec les produits sortant du réacteur, et en amont du préchauffage des produits entrant dans le réacteur, la puissance thermique fournie par la chaudière au fluide thermique étant suffisante pour que la température du produit à l'entrée du réacteur, soit comprise entre T0 et T0 - 100°C.

Le produit à traiter circule dans au moins un tube, y compris dans l'échangeur de préchauffage, jusqu'à son entrée dans le réacteur, et en au moins un endroit du tube, pour créer un anneau liquide contre la paroi intérieure du tube, au moins deux injections de liquide diamétralement opposées sont prévues, une tubulure transversale étant prévue et raccordée au tube pour chaque injection de liquide.

Avantageusement, l'échangeur thermique entre le produit à traiter et le fluide thermique est à tubes concentriques, et le produit à traiter circule dans le tube intérieur dans lequel est injecté le liquide pour former l'anneau liquide, le fluide thermique passant dans le tube extérieur.

Avantageusement, l'échangeur thermique est allongé, comportant un minimum de coudes pour maintenir l'anneau liquide en position. Dans le cas de nombreux coudes, plusieurs injections sont prévues.

Le réacteur peut être chauffé en paroi par de l'huile chaude, et être chicané, c'est à dire comporter une chicane sur le trajet du produit. Le réacteur peut être agité de manière à être nettoyé par raclage des bords du réacteur.

L'installation peut comporter, en sortie de la chaudière, une vanne trois voies permettant le chauffage du réacteur en paroi par l'huile chaude fournie par la chaudière, cette vanne trois voies permettant un réglage de température par mélange.

L'invention consiste, mises à part les dispositions exposées ci-dessus, en un certain nombre d'autres dispositions dont il sera plus explicitement question ci-après à propos d'un exemple de réalisation décrit avec référence au dessin annexé, mais qui n'est nullement limitatif. Sur ce dessin :

Fig. 1 est un schéma d'une installation pour la mise en œuvre du procédé selon l'invention, installation qui ne fait pas partie de l'invention revendiquée.
Fig. 2 est une coupe longitudinale schématique partielle d'un tube pour la circulation du produit à traiter, avec tubulures d'injection de liquide, pour créer un anneau liquide, et
Fig. 3 est une coupe schématique transversale du tube de Fig.2 au niveau des tubulures d'injection de liquide.

L'invention repose sur une approche originale qui consiste à combiner :

les qualités des échangeurs indirects tubes dans tubes, huile/produit,

- avec la technologie de l'anneau liquide,

et la carbonisation hydrothermale des boues dans un réacteur simple.

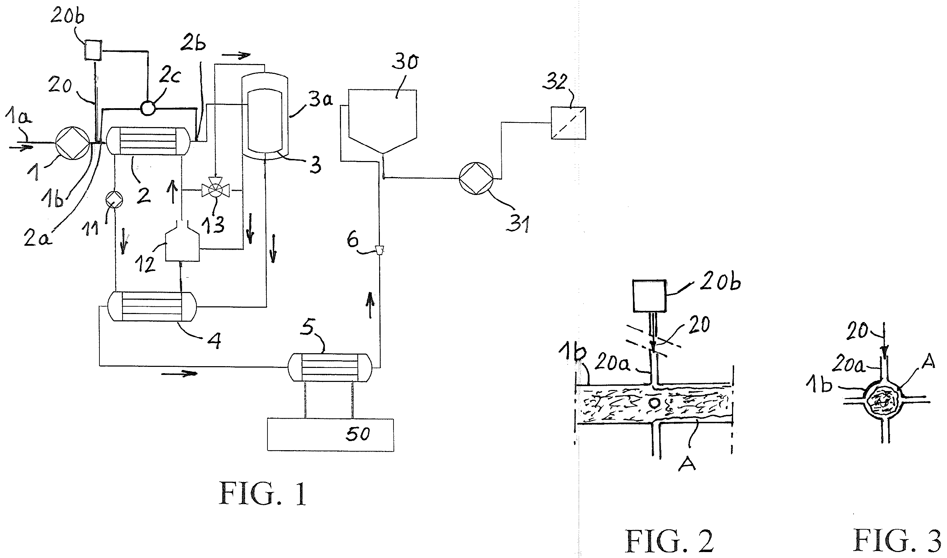

En se reportant à Fig. 1 des dessins, on peut voir que les produits à traiter arrivent par une conduite 1a dans une pompe 1.

En sortie, par la conduite ou tube 1b, de la mise en pression par la pompe 1, une injection d'acide dilué 20 est mise en œuvre avec la technologie d'anneau liquide. L'injection est effectuée par au moins une tubulure transversale 20a, notamment radiale (Fig.2 et 3), débouchant dans le tube 1 b de sortie sous pression de la pompe. Au moins deux injections de liquide diamétralement opposées sont prévues, et de préférence quatre injections réparties régulièrement sur la périphérie.

L' « anneau liquide acide » A (Fig.2 et 3) ainsi formé, du fait des faibles vitesses dans les tuyauteries et du non brassage, reste collé à la paroi interne du tube et par là même vient dissoudre des éventuelles incrustations dues au chauffage du produit. De plus cet acide participe à la réaction de carbonisation et à l'aptitude à la déshydratation du produit carbonisé.

Un échangeur 2 préférentiellement du type tube dans tube concentriques vient chauffer le produit à partir d'un fluide thermique chaud, de préférence de l'huile chaude.

Selon l'invention, l'huile est chauffée à travers une chaudière 12 à une température de 150-350°C, préférentiellement 250°C. La chaudière est alimentée en combustible extérieur à l'installation, notamment en gaz naturel. L'huile chaude à contre-courant vient réchauffer le produit, dans l'échangeur 2 jusqu' à atteindre quasiment sa température définitive 140-240°C, préférentiellement 200°C.

L'échangeur 2 est dimensionné côté huile de sorte que la température de l'huile en sortie d'échangeur soit la plus faible possible, notamment de 10 à 80°C audessus de la température du produit à réchauffer, préférentiellement de 40°C au-dessus.

Le produit rentre dans un réacteur 3 chicané dans lequel il circule en flux piston jusqu'à la sortie. Le réacteur est entouré par une enveloppe 3a formant double paroi dans laquelle circule de l'huile chaude pour le chauffage du réacteur. Une vanne mélangeuse à trois voies 13 mixée ou non avec un pompage (non représenté) permet de régler la température de l'huile dans l'enveloppe du réacteur. La vanne 13 comporte une voie reliée à la sortie de la chaudière 12, une voie reliée à l'entrée de l'enveloppe 3a, et une voie reliée à la sortie de l'enveloppe 3a, laquelle sortie est aussi reliée à l'entrée d'huile dans la chaudière 12. Le produit à traiter, déjà très chaud à l'entrée du réacteur, a acquis un faible pouvoir incrustant dans le réacteur. Un évent, non représenté, est prévu sur le réacteur 3 pour une évacuation des gaz produits.

En sortie du réacteur, le produit vient réchauffer la boucle d'huile à contre-courant à travers un échangeur 4. La boucle d'huile est mise en mouvement à travers une pompe 11. La chaudière 12 est située en aval de l'échangeur 4 et en amont du préchauffage par l'échangeur 2.

Le réacteur 3 peut être agité pour permettre un renouvellement de la couche d'échange en cas de produit particulièrement incrustant.

Le reste des équipements 5, 6, 30, 31, 32, 50 complète l'installation dans le cadre d'une ultradéshydratation par carbonisation hydrothermale. Un échangeur 5 permet de refroidir le produit carbonisé, sortant de l'échangeur 4, grâce à un fluide intermédiaire 50. Un outil de décompression 6, généralement une vanne, permet l'envoi sans vaporisation dans une cuve de stockage 30. Une pompe 31 reprend le produit en sortie de la cuve 30, et permet la filtration du produit dans un filtre 32 pour obtenir un produit ultradéshydraté.

Afin d'améliorer encore le procédé, l'injection d'acide en anneau liquide peut être faite en plusieurs endroits de l'échangeur 2 pour permettre un renouvellement de la couche d'anneau liquide.

Avantageusement la perte de charge de l'échangeur, entre l'entrée 2a et la sortie 2b (Fig.1) est contrôlée, notamment par un capteur 2c sensible à la différence de pression entre l'entrée et la sortie. Le capteur 2c transmet un signal, représentant la perte de charge, à une unité 20b d'injection de la solution acide. L'unité 20b prend en compte l'évolution de la perte de charge. En cas d'augmentation de cette perte de charge, la quantité de solution acide injectée pour l'anneau liquide est augmentée, afin de réduire cette perte de charge.

Avantageusement, la température en entrée 2a de l'échangeur 2, celle en sortie 2b de l'échangeur 2b et le débit de la pompe 1 côté produit sont mesurés pour calculer la quantité de chaleur échangée dans l'échangeur 2. Les températures de l'huile en entrée et en sortie d'échangeur 2 sont aussi mesurées pour calculer et suivre le coefficient d'échange thermique de l'échangeur 2 et adapter la quantité d'acide si le coefficient d'échange thermique diminue.

La notion de mesure du coefficient d'échange thermique k résulte de la relation :

$$Q = k \, S \, DT$$

avec

    Q : chaleur échangée,
k coefficient d'échange thermique de l'échangeur, S surface d'échange,
DT différence de température logarithmique entre les deux fluides.

On a donc k = Q/(S DT).

En mesurant Q = Débit * (T° entrée - T° sortie) d'un des deux fluides et DT c'est à dire un calcul entre les températures entrée et sortie de chaque produit, on en déduit k qui, s'il diminue est un signe d'encrassement, lequel se mesure aussi en d'autres termes par le fait qu'il faut "monter la température de l'huile" pour atteindre la même température finale, c'est à dire augmenter le DT pour avoir le même Q car k diminue.

L'échangeur 2 peut être de type rectangulaire ou autre type et muni d'un dispositif de nettoyage automatique.

**Revendications**

1. Procédé de carbonisation hydrothermale de produits pâteux ou de déchets, ou de boues de station d'épuration, dans un réacteur (3) sous pression et chauffé à température de carbonisation T0, généralement comprise entre 140°C et 280°C, procédé selon lequel les produits à traiter, avant d'être introduits dans le réacteur, subissent les étapes suivantes :

    - mise en pression,
- préchauffage dans un échangeur, par un fluide thermique qui circule selon une boucle fermée, et qui reçoit de la chaleur en provenance des produits sortant du réacteur, le fluide thermique étant chauffé dans la boucle par une source de chaleur externe (12), en aval de l'échange avec les produits sortant du réacteur, et en amont du préchauffage des produits entrant dans le réacteur, la température du produit à traiter, préchauffé par le fluide thermique, à son entrée dans le réacteur (3) étant comprise entre la température de carbonisation T0 et T0 - 100°C, **caractérisé en ce que** le produit à traiter circule dans au moins un tube (1b), y compris dans l'échangeur de préchauffage, jusqu'à son entrée dans le réacteur, et en au moins un endroit du tube, une injection (20) de liquide est effectuée pour créer un anneau liquide (A) contre la paroi intérieure du tube, et réduire les pertes de charge, cette étape d'injection de liquide étant réalisée par au moins deux injections de liquide diamétralement opposées et **en ce que** le liquide injecté est une solution acide.

2. Procédé selon la revendication 1, **caractérisé en ce que** la siccité des produits à traiter est comprise entre 15% et 30%.

3. Procédé selon la revendication 1 ou 2, **caractérisé en ce que** l'injection de solution acide est effectuée à divers niveaux de l'échangeur de préchauffage, pour contrôler le colmatage de l'échangeur.

4. Procédé selon la revendication 3, **caractérisé en ce que** la perte de charge de l'échangeur est contrôlée, et **en ce qu'**en cas d'augmentation de la perte de charge, la quantité de solution acide injectée pour l'anneau liquide est augmentée.

5. Procédé selon la revendication 3, **caractérisé en ce que** le coefficient d'échange de l'échangeur est contrôlé et **en ce qu'**en cas de diminution du coefficient d'échange, la quantité de solution acide injectée pour l'anneau liquide est augmentée.

6. Procédé selon l'une quelconque des revendications précédentes, **caractérisé en ce que** la pression dans le réacteur est comprise entre 20 et 35 bars.

7. Procédé selon l'une quelconque des revendications précédentes, **caractérisé en ce que** le fluide thermique est de l'huile.

**Patentansprüche**

1. Verfahren zur hydrothermalen Karbonisierung von pastösen Erzeugnissen oder von Abfällen, oder Von Reinigungsstationsschlamm, in einem Druckreaktor (3), der auf eine Karbonisierungstemperatur T0 erwärmt wird, die im Allgemeinen zwischen 140 °C und 280 °C beträgt, wobei die zu behandelnden Erzeugnisse vor ihrem Einbringen in den Reaktor den folgenden Schritten unterzogen werden:

    - Beaufschlagen mit Druck,
- Vorwärmen in einem Austauscher durch ein thermisches Fluid, das in einem geschlossenen Kreislauf zirkuliert und das Wärme aufnimmt, die von den aus dem Reaktor austretenden Erzeugnissen stammt, wobei das thermische Fluid in dem Kreislauf durch eine externe Wärmequelle (12) stromabwärts des Austauschs mit den aus dem Reaktor austretenden Erzeugnissen und stromaufwärts des Vorwärmens der in den Reaktor eintretenden Erzeugnisse erwärmt wird, wobei die Temperatur des zu behandelnden, durch das thermische Fluid vorgewärmten Erzeugnisses bei seinem Eintritt in den Reaktor (3) zwischen der Karbonisierungstemperatur T0 und T0-100 °C beträgt,

**dadurch gekennzeichnet, dass** das zu behandelnde Erzeugnis in mindestens einer Rohrleitung (Ib), einschließlich in dem Vorwärmaustauscher, bis zu seinem Eintritt in den Reaktor zirkuliert, und an mindestens einer Stelle der Rohrleitung eine Injektion (20) von Flüssigkeit erfolgt, um einen flüssigen Ring (A) gegen die Innenwand der Rohrleitung zu erzeugen und die Lastverluste zu reduzieren, wobei dieser Schritt der Injektion von Flüssigkeit durch mindestens zwei diametral gegenüberliegende Injektionen von Flüssigkeit erfolgt, und dadurch, dass die injizierte Flüssigkeit eine Säurelösung ist.

2. Verfahren nach Anspruch 1, **dadurch gekennzeichnet, dass** der Trockengehalt der zu behandelnden Erzeugnisse zwischen 15 % und 30 % beträgt.

3. Verfahren nach Anspruch 1 oder 2, **dadurch gekennzeichnet, dass** die Injektion der Säurelösung in unterschiedlichen Höhen des Vorwärmaustauschers erfolgt, um das Verstopfen des Austauschers zu kontrollieren.

4. Verfahren nach Anspruch 3, **dadurch gekennzeichnet, dass** der Lastverlust des Austauschers kontrolliert wird und wobei im Falle einer Zunahme des Lastverlusts die Menge der für den flüssigen Ring injizierten Säurelösung erhöht wird.

5. Verfahren nach Anspruch 3, **dadurch gekennzeichnet, dass** der Austauschkoeffizient des Austauschers kontrolliert wird und wobei im Falle einer Abnahme des Austauschkoeffizienten die Menge der für den flüssigen Ring injizierten Säurelösung erhöht wird.

6. Verfahren nach einem der vorhergehenden Ansprüche, **dadurch gekennzeichnet, dass** der Druck in dem Reaktor zwischen 20 und 35 bar beträgt.

7. Verfahren nach einem der vorhergehenden Ansprüche, **dadurch gekennzeichnet, dass** das thermische Fluid Öl ist.

**Claims**

1. A process for hydrothermal carbonization of pasty products or waste, or of treatment plant sludge, in a reactor (3) under pressure and heated to a carbonization temperature T0, generally between 140°C and 280°C, whereby the products to be treated, before being introduced into the reactor, undergo the following steps:

    - pressurization,
    - preheating in an exchanger, with a thermal fluid which circulates in a closed loop, and that receives heat originating from the products leaving the reactor, the thermal fluid being heated in the loop by an external heat source (12), downstream of the exchange with the products leaving the reactor, and upstream of the preheating of the products entering the reactor, the temperature of the product to be treated, preheated by the thermal fluid, at its entry into the reactor (3) being between the carbonization temperature T0 and T0 - 100°C, **characterized in that** the product to be treated circulates in at least one tube (1b), including through the preheating exchanger, until it enters the reactor, and in at least one place in the tube, an injection (20) of liquid is carried out to create a liquid ring (A) against the inner wall of the tube, and to reduce pressure drops, this liquid injection step being carried out by at least two diametrically opposed liquid injections and **in that** the injected liquid is an acidic solution.

2. The process according to claim 1, **characterized in that** the dryness of the products to be treated is between 15% and 30%.

3. The process according to claim 1 or 2, **characterized in that** the injection of acidic solution is carried out at various levels of the preheating exchanger, in order to control the clogging of the exchanger.

4. The process according to claim 3, **characterized in that** the pressure drop of the exchanger is controlled, and **in that**, in the event of an increase in the pressure drop, the amount of acidic solution injected for the liquid ring is increased.

5. The process according to claim 3, **characterized in that** the exchange coefficient of the exchanger is controlled, and **in that**, in the event of a decrease in the exchange coefficient, the amount of acidic solution injected for the liquid ring is increased.

6. The process according to any one of the preceding claims, **characterized in that** the pressure in the reactor is between 20 and 35 bar.

7. The process according to any one of the preceding claims, **characterized in that** the thermal fluid is oil.

FIG. 1

FIG. 2

FIG. 3

**EP 3 022 158 B2**

## RÉFÉRENCES CITÉES DANS LA DESCRIPTION

**Documents brevets cités dans la description**

- US 20060096163 A1